# EUROPEAN PATENT APPLICATION

(11) **EP 0 916 879 A1**
(43) Date of publication of application: **19.05.1999**
(21) Application number: 98309129.9
(22) Date of filing: 06.11.1998
(51) Int. Cl.: F16K 11/07

(54) **Spool**

(30) Priority: 11.11.1997 JP 325331/97
(71) Applicant: SMC CORPORATION, Minato-ku Tokyo 105 (JP)
(72) Inventor: Akimoto, Takashi, c/o SMC Corp. Tsukuba Techn. Ctr, Tsukuba-gun, Ibaraki (JP); Ishikawa, Makoto, c/o SMC Corp., Tsukuba Tech. Ctr, Tsukuba-gun, Ibaraki (JP); Tajima, Masamichi, c/o SMC Corp. Tsukuba Tech. Ctr, Tsukuba-gun, Ibaraki (JP)
(74) Representative: Findlay, Alice Rosemary

(57) **Abstract**

A spool 1 has a packing mounting groove 16 formed therein with an upper portion 16a of large groove width and a lower portion 16b of a small groove width. A packing 12 is mounted in the packing mounting groove 16 has a first portion 12a that fits in the wider portion 16a and a second portion 12b that fits in the narrower portion 16b. A plurality of fixing protrusions 22 formed on both sides of the second portion 12b are pressure-contacted with the groove walls of the narrower portion 16b to fixedly mount the packing 12 in the mounting groove 16.

## Description

The present invention relates to a spool that is built into a spool valve for switching an air channel.

A known spool comprises a bar-shaped body having at least one constricted portion forming an air channel, at least one seal land located adjacent to the constricted portion, an annular packing mounting groove formed in the seal land, and an annular packing mounted in the packing groove.

The packing generally has an elliptical cross section that is constricted in the middle, and fits into the packing mounting groove. The packing may float in the packing mounting groove which increases sliding resistance or slip out from the groove. That is, when the spool is used to switch channels, the sliding resistance between the packing and the inner circumferential surface of a valve hole or the fluid pressure acting on the packing may deform the packing or pull it outward to create a gap between the packing and the packing mounting groove. Compressed air can then flow through this gap into the space between the inner circumferential surface of the packing and the bottom of the groove and push the packing toward the outer circumference of the groove, causing it to float and thereby increasing sliding resistance or causing the packing to slip out from the mounting groove.

To solve this problem, Japanese Utility Model No. 2521876 proposes a spool arranged to prevent the packing from floating. Seal lips are provided on both sides of the packing which constantly abut the walls of the packing mounting groove to hinder flow of compressed air into the space in the bottom of the groove. Thus, the space in the bottom of the groove is sealed against any inflow of air, and when the packing starts to float, a negative pressure acts on the space in the bottom of the groove to preclude such floating.

In this improved spool, however, when the packing is fitted in the packing mounting groove, the seal lips move toward the bottom of the groove while abutting on the side walls of the groove to compress the air therein. Consequently, air resistance may affect the mounting operation or compressed air may be contained in the space at the bottom of the groove.

It is an object of this invention to provide a spool that allows a packing to be fixedly mounted in a mounting groove but without providing seal lips on the packing, and that possesses both a simple structure and high sealing accuracy.

It is another object of this invention to provide a spool in which the flexibility of the packing is improved to reduce sliding resistance during switching.

This invention provides a spool comprising a packing mounting groove and a packing mounted in the mounting groove.

The mounting groove includes a wider portion located on the opening side of the groove and a narrower portion located on its bottom side. The wider portion is deeper than the narrower portion.

The packing comprises a first portion that fits in the wider portion and a second portion that fits in the narrower portion. On both sides of the second portion, a plurality of concentric fixing protrusions in pressure-contact with the groove wall of the narrower portion are disposed so as to fix the packing in the mounting groove. Also, at least one ventilating recessed groove portion that crosses the fixing protrusions in the radial direction of the packing, is provided.

In a spool of this configuration, the packing is fixed in the mounting groove because the fixing protrusions formed on the second portion are press-fit against the groove wall of the narrower portion. The plurality of fixing protrusions are compressed so the packing is very firmly fixed and prevented from floating or slipping out from the mounting groove, thereby ensuring that an excellent sealing function is available.

In addition, the space between the inner circumferential surface of the packing and the bottom of the mounting groove is in communication with the exterior of the grove through the recessed groove portion crossing the fixing protrusions, thereby preventing compressed air from being contained in the groove bottom space and precluding the packing from floating due to the presence of such air.

Furthermore, since the mounting groove is divided into wider and narrower portions, with the wider portion deeper than the narrower one, the first portion of the packing has a larger radial length than the second portion. Preferably it fits into the wider portion in such a way as to maintain a space between itself and the groove wall. As a result, during the sliding of the spool, the first portion deforms flexibly in the wider portion, thereby reducing sliding resistance in the spool.

According to one embodiment, each of the fixing protrusions is formed so as to be a continuous line but with at least one cut out to form the recessed groove portion.

According to another specific embodiment, each of the fixing protrusions is formed by annularly arranging a plurality of small protrusions, with a gap between the adjacent small protrusions forming the recessed groove portion.

The first portion of the packing can be thinner than the second portion.

In addition, a constricted portion can be provided in at least part of the intermediate area between the first and second portions.

The invention will now be further described by way of example with reference to the accompanying drawings in which:

FIG. 1 is a sectional view showing an example of a spool valve using a spool according to this invention.

FIG. 2 is an enlarged sectional view of the integral part of the spool.

FIG. 3 is a perspective view showing an example of a packing used for the spool.

FIG. 4 is a perspective view showing another example of a packing.

FIG. 5 is an enlarged sectional view of a spool in which a different packing is mounted.

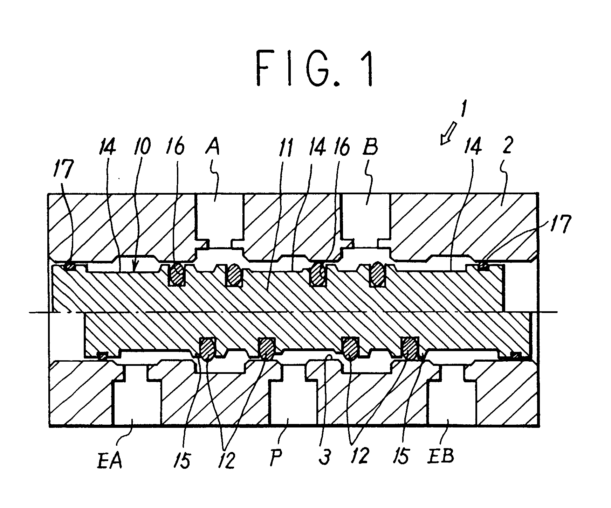

FIG. 1 shows an example of a spool valve with which a spool according to this invention may be used. A valve body of a spool valve 1 comprises a supply port P, output ports A and B, and ejection ports EA and EB, and a valve hole 3 into which these ports are opened.

A spool 10 is slidably inserted into the valve hole 3 in an airtight manner and is driven by an appropriate drive means (not shown) to alternately connect the output ports A and B to either the supply port P or the ejection port EA or EB. The spool 10 is composed of a bar-shaped spool body 11 and an annular packing 12A mounted in the spool body 11.

The spool body 11 comprises a plurality of constricted portions 14 constituting an air channel; a plurality of seal lands 15 each located adjacent to the constricted portion 14; and a plurality of packing mounting groove 16 formed on the outer circumferences of the seal lands 15, with the packing 12 fitted into each of the packing mounting grooves 16. In addition, annular seal members 17 that seal between the spool body 11 and the valve hole 3 are fitted into grooves near the respective axial ends of the spool body 11.

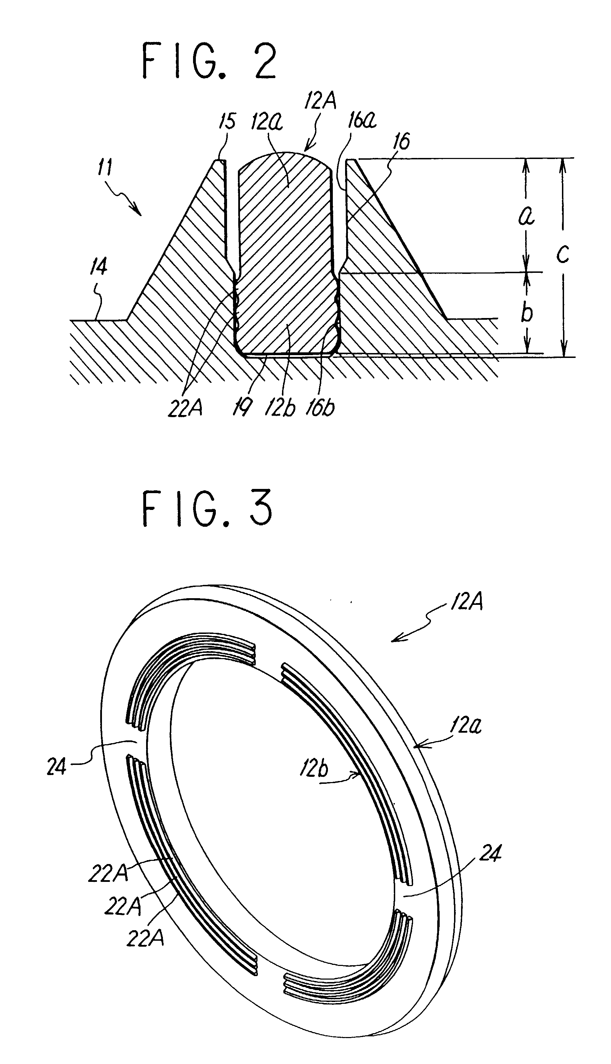

As shown in FIG. 2, the packing mounting groove 16 consists of a wider portion 16a located on the opening side and a narrower portion 16b located on the bottom, with the narrower portion 16b formed so as to have a depth (b) half or less that of the entire depth (c) of the mounting groove. In other words, the depth (a) of the wider portion is formed so as to be larger than that (b) of the narrower portion.

A first embodiment of the packing identified as 12A consists of a flexible material such as rubber, synthetic rubber, or synthetic resin which has a sealing capability, and consists of a first portion 12a located on the outer circumference and fitting the wider portion 16a of the mounting groove 16 and a second portion 12b located on the inner circumference and fitting the narrower portion 16b, as shown in FIG. 3.

The first portion 12a is formed so as to have a larger packing radial length than the second portion 12b and a slightly smaller thickness than that of the second portion 12b, and is fitted into the wider portion 16a of the mounting groove 16 in such a way as to maintain a space between itself and the groove wall.

In addition, a plurality of annular fixing protrusions 22A located concentrically around the central axis of the packing 12A are formed on both sides of the second portion 12b. The fixing protrusions 22A are pressure-contacted with the groove wall of the narrower portion 16b of the mounting groove 16 while being compressed to allow the packing 12A to be fixedly mounted in the mounting groove 16. In this case, to prevent compressed air from being contained in a groove bottom space 19 between the inner circumferential surface of the packing and the bottom of the mounting groove 16, a plurality of ventilating recessed groove portions 24 crossing each of the fixing protrusions 22 in the radial direction are formed on both sides of the second portion 12b at equal intervals. The recessed groove portions 24 serve to open the groove bottom space 19 to the exterior of the mounting groove 16.

Each fixing protrusion 22A is formed of one annularly continuous line, with part of the protrusion removed in the radial direction to form the recessed groove portion 24. The fixing protrusion 22 has an arbitrary cross section taking the shape, for example, of a trapezoid, a triangle, or a sine curve.

When the packing 12A is fitted into the mounting groove 16 while using an appropriate jig to extend the diameter of the packing 12A, the second portion 12b fits into the narrower portion 16b and the first portion 12a into the wider portion 16a, as shown in FIG. 2. The plurality of fixing protrusions 22A on the sides of the second portion 12b are pressure-contacted with the groove wall of the narrower portion 16b while being compressed, with the pressure-contacting force allowing the packing to be fixed in the mounting groove 16.

In this case, if the plurality of fixing protrusions 22A are concentrically formed and fixing protrusion 24A is pressure-contacted with the groove wall of the narrower portion 16b, the packing can be mounted using only weak force to sequentially deform the plurality of fixing protrusions 22A, making mounting easy to perform. Since the pressure-contacting force effected by the plurality of fixing protrusions 22A is added after mounting, the total pressure-contacting force allows the packing to be firmly mounted even if the pressure-contacting force provided by the individual fixing protrusion 22A is weak.

In addition, due to the recessed groove portions 24 formed in the sides of the second portion 12b in such a way as to cross the fixing protrusions 22A, compressed air is prevented from being contained in the groove bottom space 19 during the mounting of the packing 12A, thereby enabling an easy mounting operation and precluding the packing 12A from floating to increase the sliding resistance or from slipping out from the mounting groove 16.

Furthermore, the first portion 12a is formed so as to be longer than the second portion 12b and to be slightly thinner than the second portion 12b, so the first portion 12a is fitted into the wider portion 16a of the mounting groove 16 in such a way as to maintain a space between itself and the groove wall. Consequently, during the sliding of the spool, the first portion 12a can deform flexibly in the wider portion 16a to reduce sliding resistance to the spool.

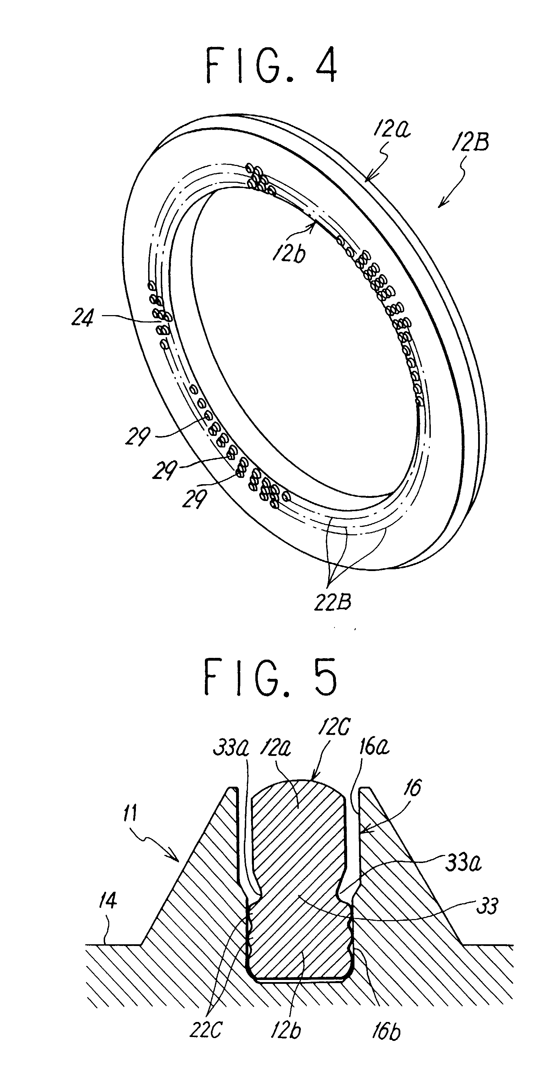

FIG. 4 shows another embodiment of the packing identified as 12B. The packing 12B differs from the packing 12A shown in FIG. 3 in that each fixing protrusion 22B is formed of a plurality of small independent protrusions 29 arranged like an annulus ring. The gap between the adjacent protrusions 29 and 29 forms the recessed groove portion 24.

The shape of the small protrusion 29 is arbitrary and may be cylindrical, prismatic, or undefined.

The other configuration of this example is substantially the same as in the packing 12A in FIG. 3, so a detailed description of it is omitted.

FIG. 5 shows the integral part of a spool in which another packing embodiment 12C is mounted. The packing 12C differs from the packings 12A and 12B shown in FIGS. 3 and 4 in that a constricted portion 33 is provided between the first and second portions 12a and 12b to improve the flexibility of the packing 12C. The constricted portion 33 may be formed all over the circumference of the packing 12C, but may also be split at an interval. The constricted portion 33 is formed by providing a recessed portion 33a in both surfaces of the packing 12C.

The formation of the constricted portion 33 improves the flexibility of the packing 12C to further reduce sliding resistance.

Fixing protrusions 22C on the packing 12C may be continuous lines as in the packing 12A shown in FIG. 3 or a series of small protrusions 29 as in the packing 12B shown in FIG. 4.

## Claims

1. A spool comprising a bar-shaped spool body including at least one constricted portion forming an air channel, at least one seal land located adjacent to the constricted portion, an annular packing mounting groove formed in the seal land, and an annular packing mounted in the packing groove, wherein the mounting groove includes a first portion at its top and a second portion at its bottom, the first portion being relatively wider and having greater depth than the second portion, wherein the packing comprises a first portion that fits into the first, wider, portion of the mounting groove and a second portion that fits into the second, narrower, portion, the second portion having on both sides a plurality of fixing protrusions that are press-fit against the groove wall of the narrower portion to fix the packing in the mounting groove, and wherein at least one ventilating recessed groove crosses the fixing protrusions.

2. A spool as claimed in Claim 1 wherein the fixing protrusions comprises concentric rings each including at least one cut out for forming the recessed groove portion.

3. A spool as claimed in Claim 1 wherein each fixing protrusion is formed by arranging a plurality of small independent protrusions to form a series of concentric rings and so that a gap between adjacent protrusions forms the recessed groove portion.

4. A spool as claimed in any preceding Claim wherein the first portion of the packing is thinner than the second portion.

5. A spool as claimed in any preceding Claim wherein at least part of the portion of the packing intermediate the first and second portions is constricted to improve flexibility.
